# EUROPEAN PATENT APPLICATION

(11) **EP 4 769 288 A1**
(43) Date of publication of application: **01.07.2026**
(21) Application number: 24856308.2
(22) Date of filing: 07.08.2024
(51) Int. Cl.: G06Q 50/10, G01D 9/00

(54) **INFORMATION PROCESSING DEVICE, INFORMATION PROCESSING METHOD, AND INFORMATION PROCESSING PROGRAM**

(30) Priority: 24.08.2023 JP 2023136629
(71) Applicant: TEIJIN LIMITED, Kita-ku, Osaka-shi, Osaka 530-0005 (JP)
(72) Inventor: NOMURA, Akihisa, Osaka-shi, Osaka 530-0005 (JP)
(74) Representative: Carpmaels & Ransford LLP
(86) International application number: PCT/JP2024/028296
(87) International publication number: WO 2025/041617

(57) **Abstract**

There is provided an information processing apparatus including: an acquisition unit that acquires at least information of a collection amount of a target gas containing any greenhouse gas component, information of a collection place, and a processing amount of concentration reduction processing of reducing a concentration of the greenhouse gas component, which is performed on the target gas as information related to the concentration reduction processing; and a calculation unit that calculates and records an amount obtained by reducing the greenhouse gas component from the target gas during a predetermined period based on the information acquired by the acquisition unit.

## Description

### Technical Field

The present disclosure relates to an information processing apparatus, an information processing method, and an information processing program.

### Background Art

One of the causes of global warming is considered to be an increase in concentration of greenhouse gases including carbon dioxide in the atmosphere. In order to reduce greenhouse gases, the Kyoto Protocol was adopted in 1997. Under the Kyoto Protocol, greenhouse gas emission limits were set for each country.

In addition, a financial product called "Carbon Credit" has been devised in order to encourage further reduction in greenhouse gases. Companies aim to achieve greenhouse gas reduction by not only reducing greenhouse gas emissions but also purchasing carbon credits. Japanese Patent No. 7286212 discloses a technique related to handling of carbon credits.

### SUMMARY OF INVENTION

### Technical Problem

As described above, it is necessary to continuously reduce greenhouse gases for countermeasures against global warming. Therefore, a mechanism for appropriately guaranteeing the reduction amount of a greenhouse gas by a company is required.

The disclosure has been made in view of the above points, and an object thereof is to provide an information processing apparatus, an information processing method, and an information processing program that appropriately guarantee a reduction amount of a greenhouse gas.

### Solution to Problem

According to a first aspect of the disclosure, an information processing apparatus includes: an acquisition unit that acquires at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and a calculation unit that calculates and records an amount by which the greenhouse gas component has been reduced from the target gas during a predetermined period, based on the information acquired by the acquisition unit.

According to the first aspect of the disclosure, it is possible to appropriately guarantee a reduction amount of a greenhouse gas by calculating and recording an amount by which a greenhouse gas component is reduced, based on information related to concentration reduction processing.

According to a second aspect of the disclosure, in the information processing apparatus according to the first aspect, the acquisition unit acquires and records a first value that is a measurement value of the collection amount of the target gas, a second value that is a measurement value of the concentration of the greenhouse gas component in the target gas, information of the collection place of the target gas, information of a collection date and time at which the second value is measured, a third value that is a measurement value of an amount of the concentration reduction processing that is performed on the collected target gas, a fourth value that is a measurement value of the concentration of the greenhouse gas component in the target gas after the concentration reduction processing is performed on the collected target gas, and information of a processing date and time at which the concentration reduction processing is performed on the collected target gas; and the calculation unit calculates and records the amount by which the greenhouse gas component has been reduced from the target gas during the predetermined period by using the first value, the second value, the third value, the fourth value, the information of the collection date and time, and the information of the processing date and time.

According to the second aspect of the disclosure, it is possible to appropriately guarantee the reduction amount of the greenhouse gas by calculating and recording an amount by which the greenhouse gas component is reduced, based on information regarding collection of the greenhouse gas and information related to the concentration reduction processing.

According to a third aspect of the disclosure, in the information processing apparatus according to the second aspect, the acquisition unit acquires the third value and the fourth value by using values measured in a case in which the concentration reduction processing is performed after increasing the concentration of the greenhouse gas component in the collected target gas as the third value and the fourth value.

According to the third aspect of the disclosure, it is possible to set an acquisition interval of the information of the reduction amount of the greenhouse gas to be a relatively long period by acquiring a value after increasing the concentration of the greenhouse gas component.

According to a fourth aspect of the disclosure, in the information processing apparatus according to the second aspect, the acquisition unit acquires a proper noun of the collection place, position information of the collection place, and an image of the collection place to which the position information of the collection place is assigned, as the information of the collection place.

According to the fourth aspect of the disclosure, it is possible to guarantee a place where the greenhouse gas has been acquired, by acquiring the image of the collection place to which the position information is assigned as the information of the collection place.

According to a fifth aspect of the disclosure, in the information processing apparatus according to the first aspect, the acquisition unit acquires and records information regarding energy used for the concentration reduction processing.

According to the fifth aspect of the disclosure, it is possible to guarantee the information regarding the energy required for reducing the greenhouse gas, by acquiring the information regarding the energy used for the concentration reduction processing.

According to a sixth aspect of the disclosure, in the information processing apparatus according to the first aspect, the acquisition unit acquires and records information of a person in charge of the concentration reduction processing.

According to the sixth aspect of the disclosure, it is possible to guarantee the information regarding reduction in the greenhouse gas by acquiring the information of the person in charge of the concentration reduction processing.

According to a seventh aspect of the disclosure, in the information processing apparatus according to the first aspect, the acquisition unit acquires and records a moving image in which the concentration reduction processing is recorded.

According to the seventh aspect of the disclosure, it is possible to guarantee the information regarding reduction in the greenhouse gas by acquiring the moving image in which the concentration reduction processing is recorded.

According to an eighth aspect of the disclosure, the information processing apparatus according to the first aspect further includes an information providing unit that provides information recorded by the acquisition unit and the calculation unit to an outside.

According to the eighth aspect of the disclosure, it is possible to provide the guaranteed information regarding the reduction in the greenhouse gas to the outside.

According to a ninth aspect of the disclosure, in the information processing apparatus according to the eighth aspect, the information providing unit selects information to be provided according to an external provision destination.

According to the ninth aspect of the disclosure, in a case in which the guaranteed information regarding the reduction in the greenhouse gas is provided to the outside, it is possible to provide the information to be kept secret without being disclosed.

According to a tenth aspect of the disclosure, an information processing method includes: by a processor, acquiring at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and calculating and recording an amount by which the greenhouse gas component has been reduced from the target gas during a predetermined period based on the acquired information.

According to the tenth aspect of the disclosure, it is possible to appropriately guarantee a reduction amount of a greenhouse gas by calculating and recording an amount by which a greenhouse gas component is reduced, based on information related to concentration reduction processing.

According to an eleventh aspect of the disclosure, an information processing program causes a computer to execute a process including: acquiring at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and calculating and recording an amount by which the greenhouse gas component has been reduced from the target gas during a predetermined period based on the acquired information.

According to the eleventh aspect of the disclosure, it is possible to appropriately guarantee a reduction amount of a greenhouse gas by calculating and recording an amount by which a greenhouse gas component is reduced, based on information related to concentration reduction processing.

### Advantageous Effects of Invention

According to the disclosure, it is possible to provide an information processing apparatus, an information processing method, and an information processing program that appropriately guarantee a reduction amount of a greenhouse gas.

### BRIEF DESCRIPTION OF DRAWINGS

Fig. 1 is a diagram illustrating a schematic configuration of a greenhouse gas reduction amount management system including an information processing apparatus according to an embodiment of the disclosed technique.
Fig. 2 is a block diagram illustrating a hardware configuration of the information processing apparatus.
Fig. 3 is a block diagram illustrating an example of a functional configuration of the information processing apparatus.
Fig. 4A is a diagram illustrating an example of a data structure of a database.
Fig. 4B is a diagram illustrating another example of the data structure of the database.
Fig. 4C is a diagram illustrating still another example of the data structure of the database.
Fig. 5 is a flowchart illustrating a flow of information processing by the information processing apparatus.

### DESCRIPTION OF EMBODIMENTS

Hereinafter, examples of embodiments of the technique of the disclosure will be described with reference to the drawings. Note that, in the drawings, the same or equivalent components and portions are denoted by the same reference signs. Dimensions and ratios of the drawings are exaggerated for convenience of description, and may be different from actual ratios.

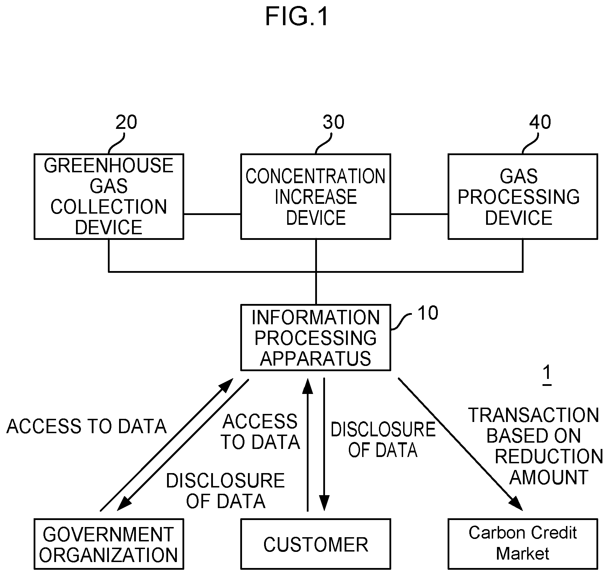

Fig. 1 is a diagram illustrating a schematic configuration of a greenhouse gas reduction amount management system including an information processing apparatus according to the present embodiment.

A greenhouse gas reduction amount management system 1 is a system for a company or the like to manage a reduction amount of a greenhouse gas. The greenhouse gas reduction amount management system 1 is a system that reduces greenhouse gases contained in the atmosphere collected in factories, along main roads, and the like, manages the reduction amount of the greenhouse gases, and provides information of the reduction amount of the greenhouse gases. The greenhouse gas in the present embodiment refers to a gas whose emission is regulated, such as carbon dioxide (CO₂), methane (CH₄), nitrous oxide (N₂O), nitrogen oxide (NOx), or a chlorofluorocarbon gas, and is preferably carbon dioxide (CO₂), methane (CH₄), nitrous oxide (N₂O), or a chlorofluorocarbon gas, more preferably carbon dioxide (CO₂), methane (CH₄), or nitrous oxide (N₂O), and still more preferably carbon dioxide (CO2) or nitrous oxide (N₂O). The above greenhouse gas is preferable because the emission amount and reduction amount of carbon-based oxides and nitrogen-based oxides having a large greenhouse effect can be managed. The greenhouse gas reduction amount management system 1 includes an information processing apparatus 10, a greenhouse gas collection device 20, a concentration increase device 30, and a gas processing device 40.

The information processing apparatus 10 is an apparatus that manages and provides various types of information regarding reduction in greenhouse gases. Specifically, the information processing apparatus 10 manages information regarding collection of a greenhouse gas by the greenhouse gas collection device 20, information regarding the greenhouse gas whose concentration has been increased by the concentration increase device 30, and information regarding the greenhouse gas whose concentration has been decreased by the gas processing device 40, and provides information regarding the greenhouse gas that is reduced by decreasing the concentration.

The information processing apparatus 10 discloses the managed data, for example, in response to a data access request of a government agency or a customer of a company. Note that the information processing apparatus 10 does not need to disclose all pieces of held information in a case in which data is disclosed. For example, in a case in which the concentration of the greenhouse gas is reduced in the gas processing device 40, information to be treated as a trade secret may be included. Thus, the information processing apparatus 10 may conceal such information and disclose information regarding the reduction in the greenhouse gas.

Furthermore, the information processing apparatus 10 may provide managed data for transactions in the carbon credit market. Even in the case of transactions in the carbon credit market, it is not necessary to disclose all pieces of the held information as described above.

The greenhouse gas collection device 20 is a device that collects air containing a greenhouse gas in a factory, along a main road, or the like. The greenhouse gas collection device 20 acquires a collection date and time, a collection place, and a collection amount as information regarding collection of the greenhouse gas. As the information of the collection place, the greenhouse gas collection device 20 may acquire a proper noun of the collection place, positional information of the collection place, and an image of the collection place. In addition, the greenhouse gas collection device 20 may acquire an image indicating an operating status of a processing facility as the information of the collection place. The image indicating the operating status of the processing facility may be, for example, an image indicating the operating state of a fan. The greenhouse gas collection device 20 can further ensure reliability of collection of the greenhouse gas by acquiring the image indicating the operating status of the processing facility as the information of the collection place.

The concentration increase device 30 is a device that increases the concentration of the greenhouse gas with respect to the atmosphere containing the greenhouse gas collected by the greenhouse gas collection device 20. The concentration increase device 30 may have any configuration as long as the concentration increase device 30 can increase the concentration of the greenhouse gas. By increasing the concentration of the greenhouse gas, the concentration of the greenhouse gas in the atmosphere as a processing target, which is processed by the gas processing device 40, is stabilized. Since the concentration of the greenhouse gas in the atmosphere as the processing target is stabilized, it is possible to set an acquisition interval of data from the gas processing device 40 in the information processing apparatus 10 to be a relatively long period such as daily.

The gas processing device 40 is a device that reduces the concentration of the greenhouse gas with respect to the atmosphere as the processing target in which the concentration of the greenhouse gas is increased by the concentration increase device 30. For example, in a case in which the greenhouse gas as the processing target is nitrous oxide (N₂O), the gas processing device 40 reduces the concentration of nitrous oxide (N₂O) by converting nitrous oxide (N₂O) into nitrogen gas (N₂).

The configuration of the gas processing device 40 is not limited as long as the gas processing device 40 can reduce the concentration of the greenhouse gas. The gas processing device 40 may electrically reduce the concentration of the greenhouse gas, may reduce the concentration by using microorganisms, or may reduce the concentration through a solid catalyst. In the case of electrically reducing the concentration of the greenhouse gas, for example, the concentration of the greenhouse gas may be electrically reduced by a method in which air as the processing target is put in a container and the greenhouse gas is adsorbed by a porous membrane provided in the container. In addition, nitrous oxide (N₂O) may be converted into a compound containing a nitrogen atom by an electrochemical method, a catalyst, or a microorganism.

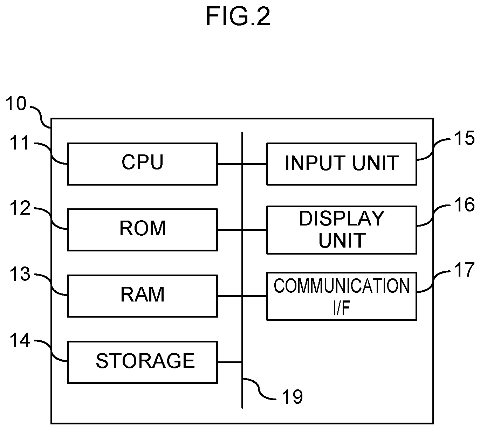

Fig. 2 is a block diagram illustrating a hardware configuration of the information processing apparatus 10.

As illustrated in Fig. 2, the information processing apparatus 10 includes a CPU (Central Processing Unit) 11, a ROM (Read Only Memory) 12, a RAM (Random Access Memory) 13, a storage 14, an input unit 15, a display unit 16, and a communication interface (I/F) 17. The respective configurations are communicatively connected to each other via a bus 19.

The CPU 11 is a central processing unit, and executes various programs and controls each unit. That is, the CPU 11 reads a program from the ROM 12 or the storage 14 and executes the program by using the RAM 13 as a work area. The CPU 11 performs control of each configuration and various types of arithmetic processing in accordance with the program recorded in the ROM 12 or the storage 14. In the present embodiment, the ROM 12 or the storage 14 stores an information processing program for managing and providing various types of information regarding reduction in the greenhouse gas. That is, the information processing apparatus 10 is an example of a computer of the disclosure.

The ROM 12 stores various programs and various types of data. The RAM 13 temporarily stores a program or data as a work area. The storage 14 is configured by a storage device such as an HDD (Hard Disk Drive), an SSD (Solid State Drive), or a flash memory and stores various programs including an operating system and various types of data.

The input unit 15 includes a pointing device such as a mouse and a keyboard, and is used to perform various inputs.

The display unit 16 is, for example, a liquid crystal display, and displays various types of information. The display unit 16 may function as the input unit 15 by adopting a touch panel system.

The communication interface 17 is an interface for communicating with other devices such as the greenhouse gas collection device 20, the concentration increase device 30, and the gas processing device 40, and for example, standards such as Ethernet (registered trademark), FDDI, and Wi-Fi (registered trademark) are used.

In the case of executing the above information processing program, the information processing apparatus 10 implements various functions by using the above hardware resources. A functional configuration implemented by the information processing apparatus 10 will be described.

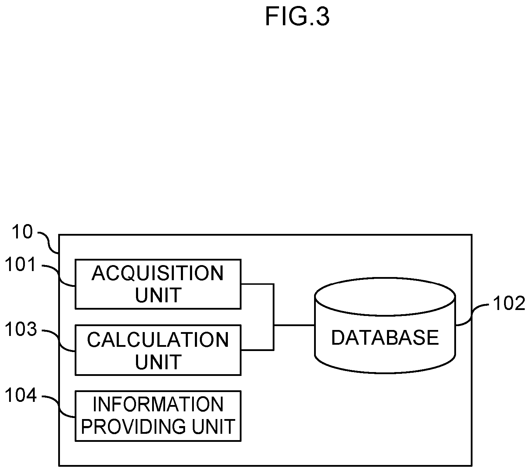

Fig. 3 is a block diagram illustrating an example of the functional configuration of the information processing apparatus 10.

As illustrated in Fig. 3, the information processing apparatus 10 includes an acquisition unit 101, a calculation unit 103, and an information providing unit 104 as the functional configuration. Each functional configuration is implemented by the CPU 11 reading and executing the information processing program stored in the ROM 12 or the storage 14.

The acquisition unit 101 acquires at least information of a collection amount of a target gas containing any greenhouse gas component, information of a collection place, and a processing amount of concentration reduction processing of reducing a concentration of the greenhouse gas component, which is performed on the target gas as information related to the concentration reduction processing. The acquisition unit 101 records the acquired information in a database 102. Note that the database 102 is generated in the storage 14, and may be generated in a device different from the information processing apparatus 10.

More specifically, the acquisition unit 101 acquires a first value that is a measurement value of the collection amount of the target gas in the greenhouse gas collection device 20, a second value that is a measurement value of the concentration of the greenhouse gas component in the target gas, information of the collection place of the target gas, information of a collection date and time at which the second value is measured, a third value that is a measurement value of an amount by which the gas processing device 40 performs the concentration reduction processing on the collected target gas, a fourth value that is a measurement value of the concentration of the greenhouse gas component in the target gas after the concentration reduction processing is performed on the collected target gas, and information of a processing date and time at which the concentration reduction processing is performed on the collected target gas, and records the acquired value and information in the database 102. The greenhouse gas collection device 20 and the gas processing device 40 include any sensor, for example, an air flow sensor, a concentration sensor, or other sensors that measure the amount or concentration of gas so that the acquisition unit 101 can acquire various values.

After concentration increase device 30 increases the concentration of the greenhouse gas component in the collected target gas as the third value and the fourth value, the acquisition unit 101 may acquire a value measured in a case in which the concentration reduction processing is performed and record the acquired value in the database 102. In addition, the acquisition unit 101 may acquire an image of the collection place to which position information is assigned, as the information of the collection place and record the image in the database 102.

In addition, the acquisition unit 101 may acquire information regarding energy used for the concentration reduction processing in the gas processing device 40 and record the information in the database 102. The information regarding the energy used in the concentration reduction processing may be the amount of power used in the concentration reduction processing, the use amount of gas, boiler, water, and the like in the concentration reduction processing, the type and amount of microorganisms used in the concentration reduction processing, the temperature of a solid catalyst in a case in which the solid catalyst is used, the temperature of the processed gas, and the like.

In addition, the acquisition unit 101 may acquire information of a person in charge of the concentration reduction processing in the gas processing device 40 and record the information in the database 102. The information of the person in charge may be the name of the person in charge or a code for uniquely identifying the person in charge. The acquisition unit 101 can verify that the concentration reduction processing has been correctly performed in the gas processing device 40, by recording the person in charge of the concentration reduction processing in the gas processing device 40. The acquisition unit 101 is not limited to the information of the person in charge of the gas processing device 40, and may acquire information of a person in charge of each of the greenhouse gas collection device 20 and the concentration increase device 30.

In addition, the acquisition unit 101 may acquire a moving image in which concentration reduction processing in the gas processing device 40 is recorded and record the moving image in the database 102. The acquisition unit 101 can verify that the concentration reduction processing has been correctly performed in the gas processing device 40, by acquiring the moving image in which the concentration reduction processing in the gas processing device 40 is recorded.

Based on the information acquired by the acquisition unit 101, the calculation unit 103 calculates an amount by which the greenhouse gas component is reduced from the target gas during a predetermined period, and records the amount in the database 102. More specifically, the calculation unit 103 calculates the amount by which the greenhouse gas component is reduced from the target gas during the predetermined period, by using the first value, the second value, the third value, the fourth value, the information of the collection date and time, and the information of the processing date and time, which are acquired by the acquisition unit 101, and records the amount in the database 102. In a case where the measurement values of a processing amount and the concentration of the greenhouse gas component in the gas processing device 40 are known, the calculation unit 103 can calculate the amount by which the greenhouse gas component is reduced from the target gas during a predetermined period.

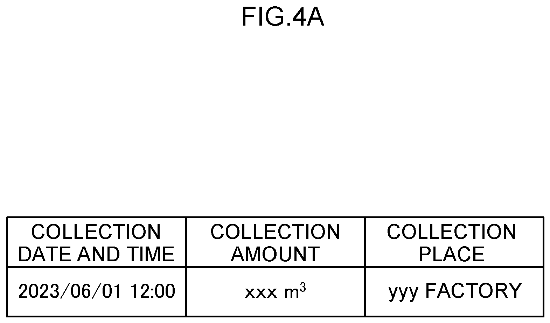

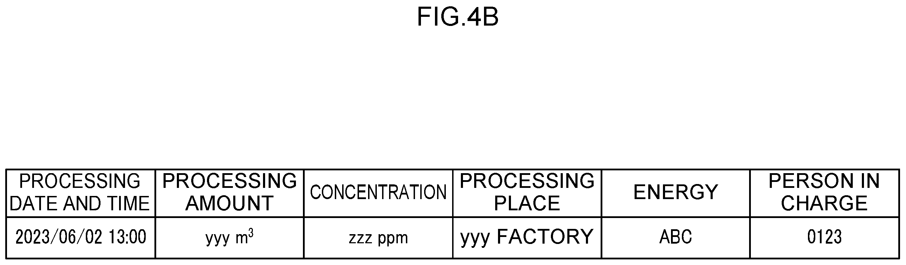

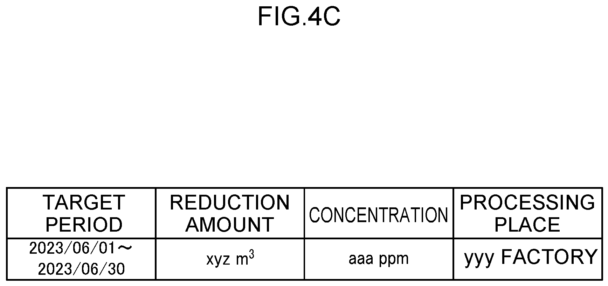

Figs. 4A to 4C are diagrams illustrating data structure examples of the database 102 in which the information acquired by the acquisition unit 101 and the amount calculated by the calculation unit 103 are recorded. Fig. 4A is an example of information and values that are acquired by the acquisition unit 101 from the greenhouse gas collection device 20 and recorded in the database 102. In Fig. 4A, information of a collection date and time, a collection amount, and a collection place is recorded. Fig. 4B is an example of information and values that are acquired by the acquisition unit 101 from the gas processing device 40 and recorded in the database 102. In Fig. 4B, pieces of information of a processing date and time, a processing amount, a concentration of the greenhouse gas after being increased by the concentration increase device 30, a processing place, energy, and a person in charge are recorded. Fig. 4C illustrates an example of the amount of the greenhouse gas reduced by the concentration reduction processing in the gas processing device 40 during a predetermined period (here, one month in June 2023) that is calculated by the calculation unit 103 and recorded in the database 102.

It should be understood that, information recorded in the database 102 illustrated in Figs. 4A to 4C is merely an example, and the information recorded in the database 102 is not limited to the information illustrated in Figs. 4A to 4C. As described above, the image of the collection place to which the position information is assigned and the moving image in which the concentration reduction processing in the gas processing device 40 is recorded may be recorded in the database 102.

The information providing unit 104 provides the information recorded by the acquisition unit 101 and the calculation unit 103 to the outside such as a government agency, a customer, a carbon credit market, or the like. The information providing unit 104 does not need to disclose all pieces of the information recorded in the database 102 in the case of providing the information to the outside. For example, in a case in which the concentration of the greenhouse gas is reduced in the gas processing device 40, information to be treated as a trade secret may be included. Thus, the information providing unit 104 may conceal such information and disclose information regarding the reduction in the greenhouse gas.

With such a configuration, the information processing apparatus 10 can appropriately guarantee the reduction amount of the greenhouse gas. Furthermore, with such a configuration, the information processing apparatus 10 can provide information regarding the appropriately guaranteed reduction amount of the greenhouse gas to the outside.

Note that the information acquired by the acquisition unit 101 and the information of the reduction amount of the greenhouse gas calculated by the calculation unit 103 may be displayed on the display unit 16 by any user interface. For example, with the user interface, information regarding the reduction of the greenhouse gas such as a change in the reduction amount of the greenhouse gas or a difference from target reduction may be presented in a graph.

Next, the operation of the information processing apparatus 10 will be described.

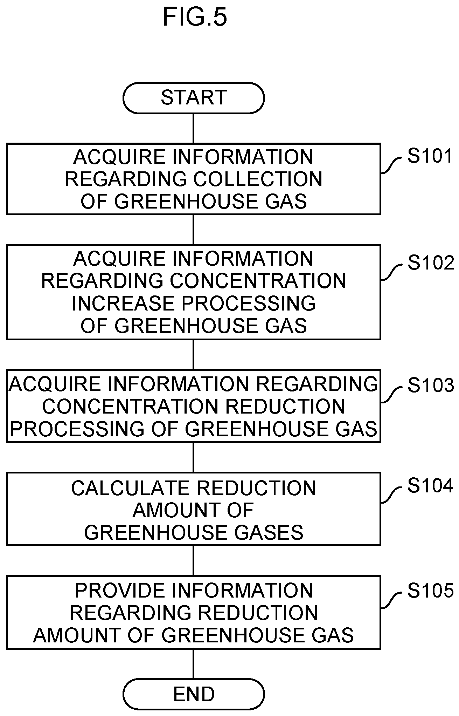

Fig. 5 is a flowchart illustrating a flow of information processing by the information processing apparatus 10. The CPU 11 reads the information processing program from the ROM 12 or the storage 14, loads the information processing program in the RAM 13, and executes the information processing program, whereby information processing is performed.

In Step S101, the CPU 11 acquires information regarding collection of a target gas containing the greenhouse gas. Examples of the information regarding the collection of the target gas containing the greenhouse gas include a first value that is a measurement value of the collection amount of the target gas in the greenhouse gas collection device 20, a second value that is a measurement value of the concentration of the greenhouse gas component in the target gas, information of the collection place of the target gas, and information of the collection date and time at which the second value is measured. In the case of acquiring the information regarding the collection of the target gas containing the greenhouse gas, the CPU 11 records the acquired various types of information in the database 102 created in the storage 14.

Subsequent to Step S101, in Step S102, the CPU 11 acquires information regarding concentration increase processing of the greenhouse gas in the concentration increase device 30. Examples of the information regarding the concentration increase processing of the greenhouse gas include the amount of target gas subjected to the concentration increase processing by the concentration increase device 30, the concentration value of the greenhouse gas after being increased by the concentration increase device 30, and information of the processing date and time at which the concentration increase processing is performed. In the case of acquiring the information regarding the concentration increase processing of the greenhouse gas, the CPU 11 records the acquired various types of information in the database 102 created in the storage 14.

Subsequent to Step S102, in Step S103, the CPU 11 acquires information regarding concentration reduction processing of the greenhouse gas in the gas processing device 40. Examples of the information regarding the concentration reduction processing of the greenhouse gas include a third value that is a measurement value of the amount by which the gas processing device 40 performs the concentration reduction processing on the collected target gas, a fourth value that is a measurement value of the concentration of a greenhouse gas component in the collected target gas after the concentration reduction processing is performed on the collected target gas, and information of the processing date and time at which the concentration reduction processing is performed on the collected target gas. In the case of acquiring the information regarding the concentration reduction processing of the greenhouse gas, the CPU 11 records the acquired various types of information in the database 102 created in the storage 14.

Subsequent to Step S103, in Step S104, the CPU 11 calculates information regarding the reduction amount of the greenhouse gas in the gas processing device 40. For example, the information regarding the reduction amount of the greenhouse gas is calculated based on the third value that is a measurement value of the amount by which the gas processing device 40 performs the concentration reduction processing on the collected target gas, the fourth value that is a measurement value of the concentration of a greenhouse gas component in the collected target gas after the concentration reduction processing is performed on the collected target gas, and the information of the processing date and time at which the concentration reduction processing is performed on the collected target gas. In a case where the measurement values of the processing amount and the concentration of the greenhouse gas component in the gas processing device 40 are known, the CPU 11 can calculate the amount by which the greenhouse gas component is reduced from the target gas during a predetermined period. In the case of calculating the information regarding the reduction amount of the greenhouse gas, the CPU 11 records the calculated various types of information in the database 102 created in the storage 14.

Subsequent to Step S104, in Step S105, the CPU 11 provides the information regarding the reduction amount of the greenhouse gas in response to an access from the outside. For example, the CPU 11 provides the reduction amount of the greenhouse gas to a government organization, a customer, and the like for emissions trading of the greenhouse gas. The reduction amount of the greenhouse gas managed by the information processing apparatus 10 is a value calculated based on information that is periodically and continuously acquired from the greenhouse gas collection device 20 and the gas processing device 40. Therefore, it can be said that the reduction amount of the greenhouse gas managed by the information processing apparatus 10 is a value in which reliability and transparency are guaranteed.

The information processing apparatus 10 can appropriately guarantee the reduction amount of the greenhouse gas by performing the related processing. Furthermore, the information processing apparatus 10 can provide information regarding the appropriately guaranteed reduction amount of the greenhouse gas to the outside by performing the related processing.

Although the embodiment of the disclosure has been described in detail with reference to the accompanying drawings, the technical scope of the disclosure is not limited to such examples. It is obvious that a person having ordinary knowledge in the technical field of the disclosure can conceive various changes or modifications within the scope of the technical idea described in the claims, and it is understood that these changes or modifications naturally belong to the technical scope of the disclosure.

In addition, the effects described in the above embodiment are illustrative or exemplary, and are not limited to those described in the above embodiment. That is, the technique according to the disclosure can exhibit other effects obvious to a person having ordinary knowledge in the technical field of the disclosure from the description in the above embodiment together with the effects described in the above embodiment or instead of the effects described in the above embodiment.

Note that various processors other than the CPU may execute the information processing performed by the CPU reading software (program) in each of the above embodiments. Examples of the processor in this case include a PLD (Programmable Logic Device) in which a circuit configuration can be changed after being manufactured, such as an FPGA (Field-Programmable Gate Array), a dedicated electric circuit that is a processor having a circuit configuration exclusively designed for executing a specific process, such as an ASIC (Application Specific Integrated Circuit). In addition, the information processing may be performed by one of these various processors, or may be executed by a combination of two or more processors of the same type or different types (for example, a plurality of FPGAs or a combination of a CPU and an FPGA). More specifically, the hardware structure of these various processors is an electric circuit in which circuit elements such as semiconductor elements are combined.

In each embodiment, a form in which the information processing program is stored (installed) in the ROM or the storage in advance has been described, and the disclosure is not limited to this. The program may be provided in a form recorded in a non-transitory recording medium such as a CD-ROM (Compact Disk Read Only Memory), a DVD-ROM (Digital Versatile Disk Read Only Memory), and a USB (Universal Serial Bus) memory. The program may be downloaded from an external device via a network.

The disclosure of Japanese Patent Application No. 2023-136629 filed on August 24, 2023 is incorporated herein by reference in its entirety.

### Reference Signs List

- 1: greenhouse gas reduction amount management system
- 10: information processing apparatus
- 20: greenhouse gas collection device
- 30: concentration increase device
- 40: gas processing device

## Claims

1. An information processing apparatus comprising:
an acquisition unit that acquires at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and
a calculation unit that calculates and records an amount by which the greenhouse gas component has been reduced from the target gas during a predetermined period, based on the information acquired by the acquisition unit.

2. The information processing apparatus according to claim 1, wherein:
the acquisition unit acquires and records:
a first value that is a measurement value of the collection amount of the target gas,
a second value that is a measurement value of the concentration of the greenhouse gas component in the target gas,
information of the collection place of the target gas,
information of a collection date and time at which the second value is measured,
a third value that is a measurement value of an amount of the concentration reduction processing that is performed on the collected target gas,
a fourth value that is a measurement value of the concentration of the greenhouse gas component in the target gas after the concentration reduction processing is performed on the collected target gas, and
information of a processing date and time at which the concentration reduction processing is performed on the collected target gas; and
the calculation unit calculates and records the amount by which the greenhouse gas component has been reduced from the target gas during the predetermined period by using the first value, the second value, the third value, the fourth value, the information of the collection date and time, and the information of the processing date and time.

3. The information processing apparatus according to claim 2, wherein the acquisition unit acquires the third value and the fourth value by using values measured in a case in which the concentration reduction processing is performed after increasing the concentration of the greenhouse gas component in the collected target gas as the third value and the fourth value.

4. The information processing apparatus according to claim 2, wherein the acquisition unit acquires a proper noun of the collection place, position information of the collection place, and an image of the collection place to which the position information of the collection place is assigned, as the information of the collection place.

5. The information processing apparatus according to claim 1, wherein the acquisition unit acquires and records information regarding energy used for the concentration reduction processing.

6. The information processing apparatus according to claim 1, wherein the acquisition unit acquires and records information of a person in charge of the concentration reduction processing.

7. The information processing apparatus according to claim 1, wherein the acquisition unit acquires and records a moving image in which the concentration reduction processing is recorded.

8. The information processing apparatus according to claim 1, further comprising an information providing unit that provides information recorded by the acquisition unit and the calculation unit to an outside.

9. The information processing apparatus according to claim 8, wherein the information providing unit selects information to be provided according to an external provision destination.

10. An information processing method comprising, by a processor:
acquiring at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and
calculating and recording an amount by which the greenhouse gas component has been reduced from the target gas during a predetermined period based on the acquired information.

11. An information processing program for causing a computer to execute a process comprising:
acquiring at least information of a collection amount of a target gas containing an arbitrary greenhouse gas component, information of a collection place, and a processing amount of concentration reduction processing for reducing a concentration of the greenhouse gas component, which is performed on the target gas, as information related to the concentration reduction processing; and
calculating and recording an amount by which the greenhouse gas component has been reduced from the target gas during a predetermined period based on the acquired information.
